# NEUE EUROPÄISCHE PATENTSCHRIFT

(11) **EP 0 621 800 B2**
(45) Veröffentlichungstag und Bekanntmachung des Hinweises auf die Entscheidung über den Einspruch: **14.04.1999**
(45) Hinweis auf die Patenterteilung: 27.03.1996
(21) Anmeldenummer: 92924658.5
(22) Anmeldetag: 03.12.1992
(51) Int. Cl.: B01J 2/28

(54) **VERFAHREN ZUM BRIKETTIEREN UND KOMPAKTIEREN VON FEINKÖRNIGEN STOFFEN**
PROCESS FOR BRIQUETTING AND COMPACTING FINE GRAINED MATERIALS
PROCEDE DE BRIQUETAGE ET DE CONSOLIDATION DE MATIERES A GRAINS FINS

(30) Priorität: 04.12.1991 DE 4140019
(43) Veröffentlichungstag der Anmeldung: 02.11.1994
(73) Patentinhaber: Maschinenfabrik Köppern GmbH. & Co. KG, 45506 Hattingen (DE)
(72) Erfinder: NAUNDORF, Wolfgang, D-9200 Freiberg (DE); GUENTER, Harald, D-9200 Freiberg (DE); WOLLENBERG, Ralf, D-9230 Brand-Erbisdorf (DE); TROMMER, Dietmar, D-9200 Freiberg (DE)
(74) Vertreter: Grünecker, Kinkeldey, Stockmair & Schwanhäusser Anwaltssozietät
(86) Internationale Anmeldenummer: EP9202798
(87) Internationale Veröffentlichungsnummer: WO9311867

(56) Entgegenhaltungen:
- BE-A- 906 000
- DE-A- 2 725 687
- DE-C- 9 590
- DE-C- 266 457
- GB-A- 1 543 566
- US-A- 2 865 731

## Beschreibung

Die Erfindung bezieht sich auf ein Verfahren zum Brikettieren und Kompaktieren von feinkörnigen Stoffen. Es handelt sich hierbei insbesondere um solche Stoffe wie Hüttenstäube, Eisenspäne, Schleifstäube, Branntkalk, Naturgips, Rauchgasgips, Mineraldünger und Düngemittelmischungen.

Bei zahlreichen Prozessen fallen feinkörnige anorganische Stoffe als Produkt oder Nebenprodukt an. Die Handhabung derartiger feinkörniger Stoffe stellt immer ein schwieriges Technologie- bzw. Umwelt- oder Kostenproblem dar. Das Überführen solcher Stäube in Preßlinge oder preßverdichtete Granulate bringt entscheidende Vorteile für deren Handhabung und weitere Verwertung. Das Herstellen von Preßlingen aus feinkörnigen Erzen, Hüttenstäuben oder anderen erz- und metallhaltigen Materialien für den metallurgischen Einsatz ist eines der ältesten Anwendungsgebiete der Preßverdichtung. Stäube mit hohem Gehalt an metallischem Eisen werden durch Brikettierverfahren verdichtet und in die Verwertungsprozesse zurückgeführt. Zur Erzielung ausreichender Brikettfestigkeiten werden auch Bindemittel eingesetzt. Bevorzugt verwendet werden z.B. selbsthärtende organische Bindemittel wie Kalk, Zement und Gips. Diese Bindemittel ergeben nach der chemischen Aushärtung hohe Brikettfestigkeiten und eine für viele Prozesse wichtige thermische Beständigkeit der Preßlinge. Außerdem dienen sie der Schlackenbildung. Der Nachteil ist, daß sie erst nach Stunden bzw. Tagen bis zur angestrebten Endfestigkeit aushärten. Man hat daher auch schon Bindemittelkombinationen vorgeschlagen, die neben den genannten anorganischen Bindemitteln eine schnell wirkende Bindemittelkomponente enthalten, die die notwendige "Grünfestigkeit", also Anfangsfestigkeit, erbringen. Solche Bindemittelkombinationen sind z.B. Kalk/Stärke, Kalk/Wasserglaszement/Sulfitablauge, Zement/Zelleim oder Zement/Kartoffelschleim. Zur Kaltbrikettierung von trockenen Hüttenstäuben ist auch schon vorgeschlagen worden, hohe Preßdrücke von über 10000 bar sowie basische Zuschlagstoffe wie Kalk, Dolomit, Magnesit, Dunit, Olivin und Bauxit zu verwenden. Sie dienen einerseits als Brikettierhilfsmittel und haben andererseits einen positiven Einfluß auf den metallurgischen Prozeß.

In der DE-PS 7590 ist ein Verfahren zur Herstellung von Briketts aus Braunkohlengruß beschrieben, bei dem vorher getrocknete und fein zerriebene Papiermasse in einem gewünschten Verhältnis mit den Kohlen gemischt wird. Nach dem Passieren einer Schleudermühle wird in einem Mengfaß durch Zuführen von Dampf der gewünschte Feuchtigkeitsgrad eingestellt. Aus dem Mengfaß fällt die Masse in einen Verteiler und aus diesem in eine Preßmaschine, welche einen Druck von ca. 20 MPa liefern muß.

Die US-A-2 865 731 zeigt ein Verfahren zum Brikettieren von feinen Eisenoxidteilchen bei einem Druck bis zu 38,6 MPa (5600 psi), wobei vor dem Brikettieren eine dickflüssige Masche von Zellulosefasern zugegeben wird.

Alle bekannten Brikettierverfahren mit Bindemitteln bzw. Brikettierhilfsmitteln haben den Nachteil, daß Bindemittelanteile von 10 bis 20% und mehr notwendig sind, um ausreichende Brikettierfestigkeiten zu erzielen. Dadurch sind die Verfahrenskosten relativ hoch. Zudem kommen Stoffe in die Produkte, wie z.B. Schwefel oder Alkalien, die für die nachfolgenden Prozesse teilweise ungünstig sind. Des weiteren sind in einigen Fällen die prozeßtechnischen Voraussetzungen für die notwendige Aushärtung der Bindemittel und/oder die Nachtrocknung der Preßlinge zu schaffen. Anorganische Bindemittel in Pulverform wie Kalk und Zement können die z.T. sehr hohe Fließfähigkeit der zu brikettierenden pulverförmigen Stoffe nicht vermindern; sie tragen in vielen Fällen sogar zur Erhöhung der Fließfähigkeit bei. Daraus können ernste preßtechnische Schwierigkeiten, wie z.B. starke Preßdruckschwankungen und/oder mehr oder weniger starkes Ausfließen von unverpreßtem Preßgut aus dem Kompressionsraum, resultieren, was zur Verschlechterung der Produktqualität und zur Verringerung der Durchsatzleistung der Pressen führt.

Es ist daher Aufgabe der vorliegenden Erfindung, ein Verfahren der eingangs genannten Art, insbesondere zum Herstellen von Preßlingen aus Hüttenstäuben, Schleifstäuben, Eisenspänen, Brennkalk, Gips sowie künstlichen Düngemitteln oder Düngermischungen zu verbessern und kostengünstiger zu gestalten.

Diese Aufgabe wird erfindungsgemäß dadurch gelöst, daß man den staubförmigen Stoffen zerfasertes Papier oder zerfaserten Karton zusetzt, diese homogen mit den Stoffen mischt und das rieselfähige Preßgut ohne weitere Zufuhr von Feuchtigkeit anschließend bei einem Preßdruck größer als 40 MPa verpreßt. In bevorzugter Weise verwendet man als Bindemittel Altpapier bzw. Altkarton, der im trockenen Zustand mit geeigneten Zerkleinerungsmaschinen auf hohe Feinheit zerfasert wird. Günstig ist eine zweistufige Verkleinerung, bei der die Altpapiere bzw. Kartonagen zunächst zerschnitzelt und nachfolgend mit einer Schlagnasenmühle mit riffelblechförmigem Austragssieb zerfasert werden. Die Maschenweite des Austragssiebes bzw. die Spaltweite eines auch verwendbaren Austragsrostes beträgt bevorzugt 5 mm. Die homogene Vermischung des zerkleinerten Altpapiers mit den anorganischen Stoffen erfolgt mit Intensivmischern. Eine hohe Mischgüte wird erreicht, wenn die Brikettiergutkomponenten gemeinsam einer Mühle aufgegeben werden. Geeignet sind darüber hinaus auch intensiv wirkende Zwangsmischer allein oder in Kombination mit einer Zerkleinerungsmaschine. Die Altpapierfasern bewirken unter den genannten Zerkleinerungs- und Vermischungsbedingungen eine Reduzierung der Fließfähigkeit der pulverförmigen Stoffe bei gleichzeitiger Gewährleistung einer hohen Rieselfähigkeit des Preßgutes. Außerdem vermindern sie die Druckplastizität von feucht-plastischen und thermo-plastischen Stoffen, so daß ein Ausfließen oder Auspressen des Preßgutes aus den Preßformen der Walzenpresse verhindert wird. Auf diese Weise tragen die Papierfasern zu einer hohen Stabilität des Preßprozesses, zu einer gleichmäßigen Durchpressung des Preßgutes und zum Aufbau hoher Preßdrücke im Kompressionsraum bei. Bei der Kompaktierung mit Walzenpressen wird durch die Verringerung der Fließfähigkeit erreicht, daß der Anteil an unverpreßtem Kreislaufgut, das die Presse unkompaktiert passiert und der Presse erneut aufgegeben werden muß, stark zurückgeht. Die Altpapierfasern zeichnen sich unter den genannten Zerkleinerrungs- und Vermischungsbedingungen außerdem durch ihr außergewöhnlich hohes Bindevermögen, durch ihre Ausbildung äußerst fester Bindekräfte zwischen den Papierfasern untereinander und zwischen den Papierfasern und dem zu verpressenden feinkörnigen Gut aus. Dazu kommt die Ausbildung fester, formschlüssiger Verbindungen durch die Papierfasern. Unter diesen Bedingungen können schon durch den Einsatz von nur 1 bis 6% Masseanteilen Altpapierfasern die feinkörnigen Brikettierguter zu festen Preßlingen verpreßt werden. Unter Anwendung einer Preßtemperatur von 20° sind hierfür vorzugsweise Preßdrücke von 120 bis 150 MPa geeignet. Diese Brikettierbedingungen lassen sich vorzugsweise mit Formmuldenwalzenpressen oder bei weniger verschleißintensiven Rohstoffen auch mit Stempel-, Schnecken oder Matrizenpressen realisieren.

Die Briketts haben gute Verarbeitungs- sowie Transport- und Lagereigenschaften. Im Fall von Branntkalk oder branntkalkhaltigen Stoffen bewirkt der erfindungsgemäße Altpapierzusatz überraschend sogar eine wesentliche Verzögerung des Brikettzerfalls bei der Lagerung der Briketts an der Luft, obwohl auch Papier hydrophile Eigenschaften besitzt. Durch den Zusatz von zerfasertem Altpapier wird die Umbildung des Branntkalkes in Löschkalk stark gedämpft. Viele Hüttenstäube werden durch das beschriebene Verfahren ohne weitere Zusätze überhaupt erst brikettierbar. Bei einer Wiederverwertung des Briketts in metallurgischen Prozessen ist von Vorteil, daß durch den geringen Bindemittelanteil nur wenig ungünstige Fremdstoffe eingebracht werden. Aus den auf die erfindungsgemäße Weise hergestellten Preßlingen können mit Hilfe von Schneidgranulatoren Granulate hergestellt werden, die sich durch eine hohe Festigkeit und Lagerbeständigkeit auszeichnen. Bei leicht löslichen anorganischen Düngemitteln wie Kaliumchlorid und Ammoniumsulfat wird durch den Altpapierzusatz überraschenderweise die Auflösegeschwindigkeit der Granulate verringert. Dieser Effekt ist umso erstaunlicher, als beide Komponenten, sowohl Düngestoff als auch Papierfasern, hygrophile und sogar hygroskopische Stoffe sind. Die verringerte Löslichkeit der Düngergranulate ist günstig für die optimale Nährstoffausnutzung und vermindert gleichzeitig die Gefahr der Grundwasserverseuchung. Ferner zeichnen sich diese Granulate durch wesentlich verbesserte Lagereigenschaften aus, so daß sie auch bei längerem Einwirken von Luftfeuchtigkeit bzw. unter Druck in Silos nicht verklumpen. Die Rieselfähigkeit der Granulate bleibt erhalten, weil die Papierfasern das hygroskopische Verhalten und die Ausbildung von Bindekräften zwischen den Granulatkörpern in Form von Rekristallisationsbrücken während der Lagerung unterdrücken. Das Verfahren eignet sich insbesondere zum Brikettieren und Kompaktieren von feinkörnigen anorganischen Stoffen. Allerdings läßt sich das Verfahren mit Vorteil auch für organische Stoffe verwenden, wie beispielsweise verschiedene Sorten von Kohlen.

Weitere vorteilhafte Ausgestaltungen sind Gegenstand der Unteransprüche.

Das erfindungsgemäße Verfahren wird nachfolgend anhand von Beispielen näher erläutert.

### Beispiel 1:

96 Masseanteile von Branntkalk mit der Körnung d = 0,5/0 mm werden mit 4 Masseanteilen trockene, auf hohe Feinheit zerkleinerte Papierfasern aus Zeitungspapier intensiv in einem Zwangsmischer vermischt. Das homogene Preßgut wird mit einer Preßtemperatur von 20°C und mit einem Preßdruck von 120 MPa brikettiert. Die Druckfestigkeit der Branntkalkbriketts steigt durch die Verwendung von Altpapier als Brikettierhilfsmittel von 14,9 MPa bei 0% Altpapierfasern auf 28,0 MPa an. Die Abriebfestigkeit R30 (100), gemessen nach 3 Tagen, Lagerung der Briketts an der Luft, erhöht sich von 8,8 auf 68,1%. Des weiteren erhöht sich die Thermobeständigkeit der Briketts. Die Abriebfestigkeit R30(100) nach einer thermischen Behandlung der Briketts bei 1000°C erhöht sich von 25,5 auf 76,0%.

### Beispiel 2:

97 Masseanteile eines Konverterstaubes aus einem Stahlwerk mit der Körnung d = 0,5/0 mm werden mit 3 Masseanteilen trockene, auf hohe Feinheit zerkleinerte Papierfasern aus Karton intensiv durch gemeinsame Zerkleinerung in einer Schlagnasenmühle mit Austragssieb vermischt. Das homogene Preßgut wird mit einer Preßtemperatur von etwa 20°C und mit einem Preßdruck von 150 MPa brikettiert. Aus dem ohne Bindemittel nicht brikettierbaren Konverterstaub entstehen Briketts mit einer Druckfestigkeit von 35 MPa. Die Abriebfestigkeit R30(50) beträgt 78,5%. Bei der Vermischung von 97 Masseanteilen Konverterstaub mit 3 Masseanteilen Altpapierfasern aus Kartonagen mit einem Doppelwellenmischer wurden unter den genannten Verpressungsbedingungen Briketts mit einer Druckfestigkeit von 30 MPa erzeugt.

### Beispiel 3:

97 Masseanteile eines Mischgutes, bestehend aus 50 Masseanteilen Konverterstaub, 40 Masseanteilen Branntkalk und 10 Masseanteilen Sinterdolomit, werden mit 3 Masseanteilen trockene, auf hohe Feinheit zerkleinerte Altpapierfasern aus Kartonagen mit einem intensiv wirkenden Doppelschwellenmischer vermischt. Das Mischgut wird mit Raumtemperatur und einem Preßdruck von 150 MPa brikettiert. Die Druckfestigkeit der Briketts steigt durch den Zusatz von 3 Masseanteilen Altpapierfasern von 28 MPa bei 0% Altpapier auf 39 MPa an. Die Abriebfestigkeit R30(100) erhöht sich von 57% auf 78%.

### Beispiel 4:

94 Masseanteile Kaliumchlorid der Körnung d = 0,5/0 mm werden mit 6 Masseanteilen trockene, auf hohe Feinheit zerkleinerte Papierfasern aus Glanzpapier in einem Intensivmischer homogen vermischt. Durch die Papierfasern wird die Fließfähigkeit des Preßgutes gedämpft, seine Rieselfähigkeit aber verbessert. Dadurch erhöht sich die Stabilität des Preßprozesses bei der Kompaktierung mit Formmuldenwalzenpressen mit dem Ergebnis, daß der Anteil an unverpreßtem Kreislaufgut von 40% auf 10% sinkt. Aus den gepreßten Folien wird mit einem Schneidgranulator ein Granulat der Körnung d = 4/0 erzeugt. Durch den Papierzusatz erhöht sich der Kennwert der Druckfestigkeit des Granulates von R 1,0 auf R 1,0 = 80%. Außerdem verzögert sich die Auflösegeschwindigkeit des Granulates. Das Granulat ohne Papierzusatz ist 24 h nach Einsatz in das Wasserbad vollständig aufgelöst. Das Granulat mit 6% Glanzpapier hat im gleichen Wässerungszeitraum erst 40% seiner Masse durch Auflösen verloren.

### Beispiel 5:

94 Masseanteile NPK-Mischdünger, bestehend aus 51% Kaliumsulfat, 16,0% Ammoniumphosphat und 33% Harnstoff (N : P₂O₅ K₂O = 1 : 0,5 : 1,5) werden mit 6 Masseanteilen trockene, auf hohe Feinheit zerkleinerte Papierfasern aus Karton in einem Intensivmischer homogen vermischt. Es ergeben sich die im Beispiel 4 beschriebenen preßtechnischen Vorteile, die eine Reduzierung des Kreislaufgutes auf 5% bei der Kompaktierung mit Formmuldenwalzenpressen zur Folge haben. Die Druckfestigkeit des mit dem Schneidgranulator aus den Preßagglomeraten erzeugten Granulates erhöht sich durch den Papierzusatz von R 1,0 = 62 auf R 1,0 = 90%. Bei der Wässerung sind nach 24 h noch 50% Granulatrestmasse vorhanden. Dagegen ist das Granulat ohne Papierzusatz bereits nach 30 min vollständig aufgelöst. Das Granulat hat durch den Papierzusatz eine gute Lagerbeständigkeit. Verklumpungen durch Feuchteaufnahme und Ausbildung von Kristallisationsbrücken treten im Bereich relativer Luftfeuchtigkeiten bis zu 80% nicht auf.

## Patentansprüche

1. Verfahren zum Brikettieren und Kompaktieren von feinkörnigen Stoffen, **dadurch gekennzeichnet**, daß man den staubförmigen Stoffen trockenes, zerfasertes Papier oder trockenen, zerfaserten Karton zusetzt, diese homogen mit den Stoffen mischt und das rieselfähige Preßgut ohne weitere Zufuhr von Feuchtigkeit anschließend bei einem Preßdruck größer als 40 MPa verpreßt.

2. Verfahren nach Anspruch 1, **dadurch gekennzeichnet**, daß man Altpapier bzw. Altkarton verwendet.

3. Verfahren nach Anspruch 1 oder 2, **dadurch gekennzeichnet**, daß man das Altpapier auf hohe Feinheit zerfasert.

4. Verfahren nach einem der Ansprüche 1 bis 3, **dadurch gekennzeichnet**, daß man das Altpapier in einer Mühle mit Austragssieb oder -rost, dessen Maschen- oder Spaltweite kleiner als 5 mm ist, zerfasert.

5. Verfahren nach einem der Ansprüche 1 bis 4, **dadurch gekennzeichnet**, daß man das Altpapier zuerst zerschnitzelt und dann in einer Schlagnasenmühle zerfasert.

6. Verfahren nach einem der Ansprüche 1 bis 5, **dadurch gekennzeichnet**, daß das zu verpressende Gemisch weniger als 10% Masseanteile zerfasertes Papier enthält.

7. Verfahren nach einem der Ansprüche 1 bis 6, **dadurch gekennzeichnet**, daß das zu verpressende Gemisch bis zu 5% Masseanteile zerfasertes Altpapier enthält.

8. Verfahren nach einem der Ansprüche 1 bis 7, **dadurch gekennzeichnet**, daß der Preßdruck zwischen 120 und 150 MPa liegt.

9. Verfahren nach einem der Ansprüche 1 bis 8, **dadurch gekennzeichnet**, daß man das verpreßte Gemisch anschließend granuliert.

10. Verfahren nach einem der Ansprüche 1 bis 9, **dadurch gekennzeichnet,** daß man als feinkörnigen Stoff einen anorganischen Stoff verwendet.

11. Verfahren nach einem der Ansprüche 1 bis 10, **dadurch gekennzeichnet**, daß man als feinkörnigen Stoff einen organischen Stoff verwendet.

## Claims

1. Method of briquetting and compacting fine-grained materials, **characterized in** that dry shredded paper or dry shredded cardboard is added to the dust-like materials and homogeneously mixed with said materials and then the pourable mixture to be pressed is, without any further supply of moisture, pressed using a pressing pressure greater than 40 MPa.

2. Method according to claim 1, **characterized in** that waste paper or waste cardboard is used.

3. Method according to claim 1 or 2, **characterized in** that the waste paper is shredded extremely finely.

4. Method according to one of claims 1 to 3, **characterized in** that the waste paper is shredded in a mill with a discharge wire or grate, the mesh size or gap width of which is smaller than 5 mm.

5. Method according to one of claims 1 to 4, **characterized in** that the waste paper is first chopped into pieces and then shredded in a beater blade mill.

6. Method according to one of claims 1 to 5, **characterized in** that the mixture to be pressed contains less than 10% by weight of shredded paper.

7. Method according to one of claims 1 to 6, **characterized in** that the mixture to be pressed contains up to 5% by weight of shredded waste paper.

8. Method according to one of claims 1 to 7, **characterized in** that the pressing pressure is between 120 and 150 MPa.

9. Method according to one of claims 1 to 8, **characterized in** that the pressed mixture is subsequently granulated.

10. Method according to one of claims 1 to 9, **characterized in** that an inorganic material is used as fine-grained material.

11. Method according to one of claims 1 to 10, **characterized in** that an organic material is used as fine-grained material.

## Revendications

1. Procédé pour agglomérer et compacter des substances à grains fins, caractérisé en ce qu'on ajoute aux substances sous forme de poussières, du papier sec, défibré ou du carton sec, défibré, on les mélange d'une manière homogène avec les substances puis on comprime la matière à presser capable de s'écouler sans apport supplémentaire d'humidité sous une pression de compression supérieure à 40 MPa.

2. Procédé selon la revendication 1, caractérisé en ce qu'on utilise du vieux papier ou du vieux carton.

3. Procédé selon la revendication 1 ou 2, caractérisé en ce qu'on défibre les vieux papiers à un finesse élevée.

4. Procédé selon l'une des revendications 1 à 3, caractérisé en ce qu'on défibre les vieux papiers dans un broyeur avec un tamis ou une grille de déchargement dont la largeur de maille ou de fente est inférieure à 5 mm.

5. Procédé selon l'une des revendications 1 à 4, caractérisé en ce qu'on découpe d'abord les vieux papiers puis on les défibre dans un broyeur à marteaux

6. Procédé selon l'une des revendications 1 à 5, caractérisé en ce que le mélange à comprimer contient moins de 10 % en poids de papier défibré.

7. Procédé selon l'une des revendications 1 à 6, caractérisé en ce que le mélange à comprimer contient jusqu'à 5 % en poids de vieux papiers défibrés.

8. Procédé selon l'une des revendications 1 à 7, caractérisé en ce que la pression de compression est comprise entre 120 et 150 MPa.

9. Procédé selon l'une des revendications 1 à 8, caractérisé en ce qu'on granule ensuite le mélange comprimé.

10. Procédé selon l'une des revendications 1 à 9, caractérisé en ce qu'on utilise comme substance à grains fins une substance minérale.

11. Procédé selon l'une des revendications 1 à 10, caractérisé en ce qu'on utilise comme substance à grains fins une substance organique.
